(19) Europäisches Patentamt / European Patent Office / Office européen des brevets

(11) **EP 2 981 082 A1**

(12) **EUROPEAN PATENT APPLICATION**
published in accordance with Art. 153(4) EPC

(43) Date of publication:
**03.02.2016 Bulletin 2016/05**

(51) Int Cl.:
***H04N 19/102*** *(2014.01)*

(21) Application number: **14773126.9**

(22) Date of filing: **12.03.2014**

(86) International application number:
**PCT/JP2014/056483**

(87) International publication number:
**WO 2014/156647 (02.10.2014 Gazette 2014/40)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(30) Priority: **27.03.2013 JP 2013066313**

(71) Applicant: **National Institute of Information
and Communication Technology
Tokyo 184-8795 (JP)**

(72) Inventors:
 • **PANAHPOUR TEHRANI, Mehrdad
  Koganei-shi
  Tokyo 184-8795 (JP)**
 • **ISHIKAWA, Akio
  Koganei-shi
  Tokyo 184-8795 (JP)**
 • **KAWAKITA, Masahiro
  Koganei-shi
  Tokyo 184-8795 (JP)**
 • **INOUE, Naomi
  Koganei-shi
  Tokyo 184-8795 (JP)**
 • **FUJII, Toshiaki
  Nagoya-shi
  Aichi 464-8601 (JP)**

(74) Representative: **Kuhnen & Wacker
Patent- und Rechtsanwaltsbüro
Prinz-Ludwig-Straße 40A
85354 Freising (DE)**

(54) **METHOD FOR ENCODING A PLURALITY OF INPUT IMAGES AND STORAGE MEDIUM AND DEVICE FOR STORING PROGRAM**

(57)    A method for encoding a plurality of input images containing mutually related information is provided. The method includes the steps of estimating a motion image indicating a change component from one or more previous input images, contained in a subsequent input image, generating a residual image from a difference between the subsequent input image and the estimated motion image, specifying a region whose pixel value should be defined by a remainder among pixels constituting the residual image, based on the pixel value of the residual image, converting, into a remainder, the pixel value for the specified region which should be defined by a remainder, and encoding the residual image after the conversion and additional information specifying the region which should be defined by a remainder.

FIG.4

EP 2 981 082 A1

**Description**

TECHNICAL FIELD

The present invention relates to a method for encoding a plurality of input images containing mutually related information, and a storage medium having a program stored thereon and an apparatus.

BACKGROUND ART

There is a conventionally known video coding (video coding) technique in which redundancy between frames is taken into consideration for a moving picture composed of a sequence of frames located in the time domain (see, e.g., NPD 1). With a typical video coding technique, P frames (predicted frames) and/or B frames (bi-directional predicted frames) are transmitted instead of an original image as input. The P frame is a frame calculated by forward prediction, and the B frame is a frame calculated by any one of forward prediction, backward prediction and bi-directional prediction.

NPD 2 discloses a method for extending and applying such a video coding technique to the time domain and the spatial domain. That is, according to the teaching of NPD 2, P frames and/or B frames can be generated for a plurality of frames located in the time domain and the spatial domain.

Examples of a sequence of frames located in the spatial domain can include a sequence of frames used for a 3D display technology for providing high-definition 3D displays using multi-view images. Such 3D displays are achieved by multi-view images obtained by capturing images of an object from a large number of views (e.g., 200 views). By means of view interpolation, such as generating P frames and/or B frames using 3D information such as a distance map, a technique similar to encoding on a sequence of frames located in the time domain is also applicable to a sequence of frames located in the spatial domain.

It is noted that, throughout the present specification, compressing (converting) data into codes depending on the purpose will be described as encoding, and inverting (decrypting) the converted codes to original data will be described as decoding. The term coding shall refer to encoding alone as well as both of encoding and decoding.

CITATION LIST

NON PATENT DOCUMENT

NPD 1: Thomas Wiegand, Gary J. Sullivan, Gisle Bjontegaard, and Ajay Luthra, "Overview of the H.264/AVC Video Coding Standard", IEEE Transactions on Circuits and Systems for Video Technology, Vol. 13, No.7, pp. 560-576, July 2003 NPD 2: P. Merkle, K. Muller, A. Smolic, and. T. Wiegand, "Efficient Compression of Multi-view Video Exploiting inter-view dependencies based on H.264/MPEG4-AVC," Proc. ICME 2006, pp. 1717-1720

SUMMARY OF INVENTION

TECHNICAL PROBLEM

According to the techniques disclosed in NPD 1 and NPD 2, P frames and B frame as generated are transmitted in the form of residual values. Here, data compression is further executed on information on residual values. In this data compression, image transformation (typically, discrete cosine transform), quantization, entropy coding, and the like are executed. In the case of high data compression rate, execution of quantization causes significant data loss because of reduction of data size. That is, information on residual values of small magnitude is lost in the data compression.

On the other hand, some image features, such as edge information and boundary information, should be protected even if the data compression rate is increased.

Therefore, an encoding technique for maintaining the balance between compression efficiency and compression quality for a plurality of input images containing mutually related information is required.

SOLUTION TO PROBLEM

According to an aspect of the present invention, a method for encoding a plurality of input images containing mutually related information is provided. The method includes the steps of estimating a motion image indicating a change component from one or more previous input images, contained in a subsequent input image, generating a residual image from a difference between the subsequent input image and the estimated motion image, specifying a region whose pixel value should be defined by a remainder among pixels constituting the residual image, based on the pixel value of the residual image, converting, into a remainder, the pixel value for the specified region which should be defined by a remainder, and encoding the residual image after the conversion and additional information specifying the region which should be defined by a remainder.

Preferably, the method further includes the step of executing an inverse modulo operation on a pixel defined by the remainder among pixels constituting the residual image after the conversion, thereby decoding the residual image. The step of estimating includes a step of estimating the motion image based on the decoded residual image.

Preferably, the step of specifying includes a step of determining the region which should be defined by a remainder on a pixel basis based on a magnitude of the pixel value of each of the pixels constituting the residual image, and the additional information contains information for specifying each pixel defined by a remainder among the pixels constituting the residual image.

Preferably, the step of specifying includes a step of, for each of blocks obtained by dividing the residual image into predetermined size, determining the region which should be defined by a remainder on a block basis based on a result of combining evaluations of pixel values of respective pixels constituting the block, and the additional information contains information for specifying a block defined by a remainder among the blocks included in the residual image.

Preferably, the step of converting includes steps of executing a modulo operation on the pixel value for the region which should be defined by a remainder, obtaining gradient information on the motion image, and with reference to a predetermined correspondence between a gradient and a value for use as a modulus in the modulo operation, determining the value for use as a modulus in the modulo operation based on the obtained gradient information.

Preferably, the additional information contains evaluation criteria for specifying the region whose pixel value should be defined by a remainder among pixels constituting a residual image.

According to another aspect of the present invention, a storage medium having a program stored thereon for encoding a plurality of input images containing mutually related information is provided. The program causes a computer to perform the steps of estimating a motion image indicating a change component from one or more previous input images, contained in a subsequent input image, generating a residual image from a difference between the subsequent input image and the estimated motion image, specifying a region whose pixel value should be defined by a remainder among pixels constituting the residual image, based on the pixel value of the residual image, converting, into a remainder, the pixel value for the specified region which should be defined by a remainder, and encoding the residual image after the conversion and additional information specifying the region which should be defined by a remainder.

According to still another aspect of the present invention, an apparatus for encoding a plurality of input images containing mutually related information is provided. The apparatus includes means for estimating a motion image indicating a change component from one or more previous input images, contained in a subsequent input image, means for generating a residual image from a difference between the subsequent input image and the estimated motion image, means for specifying a region whose pixel value should be defined by a remainder among pixels constituting the residual image, based on the pixel value of the residual image, means for converting, into a remainder, the pixel value for the specified region which should be defined by a remainder, and means for encoding the residual image after the conversion and additional information specifying the region which should be defined by a remainder.

ADVANTAGEOUS EFFECTS OF INVENTION

According to the present invention, an encoding technique for maintaining the balance between compression efficiency and compression quality can be achieved for a plurality of input images containing mutually related information.

BRIEF DESCRIPTION OF DRAWINGS

Fig. 1 is a diagram showing a 3D displays reproduction system including an encoding/decoding system according to an embodiment of the present invention.
Fig. 2 is a functional block diagram of an encoder according to a related art of the present invention.
Fig. 3 is a functional block diagram of a decoder according to the related art of the present invention.
Fig. 4 is a functional block diagram of an encoder according to the embodiment of the present invention.
Fig. 5 illustrates techniques for combining remainders and residuals according to the embodiment of the present invention.
Fig. 6 is a functional block diagram of a data format conversion unit according to the embodiment of the present invention.
Fig. 7 shows a diagram of an example of a Lookup table for determining a factor for use in calculating a remainder according to the embodiment of the present invention.
Fig. 8 is another functional block diagram of the data format conversion unit according to the embodiment of the present invention.

Fig. 9 is a functional block diagram of a data format reconversion unit according to the embodiment of the present invention.

Fig. 10 is a functional block diagram of a decoder according to the embodiment of the present invention.

Fig. 11 is a schematic view showing a hardware configuration of an information processing apparatus functioning as a sender.

Fig. 12 is a schematic view showing a hardware configuration of an information processing apparatus functioning as a receiver.

DESCRIPTION OF EMBODIMENTS

An embodiment of the present invention will be described in detail with reference to the drawings. It is noted that, in the drawings, the same or corresponding portions have the same reference characters allotted, and detailed description thereof will not be repeated.

[A. Application Example]

First, a typical application example will be described for easy understanding of an encoding/decoding system according to an embodiment of the present application. It is noted that the application range of the encoding/decoding system according to the embodiment of the present application is not limited to a structure which will be described below, but can be applied to any structure. A method, an apparatus and a program for executing either of encoding and decoding, a storage medium that stores the program and the like thereon may also be included in the scope of the invention of the present application.

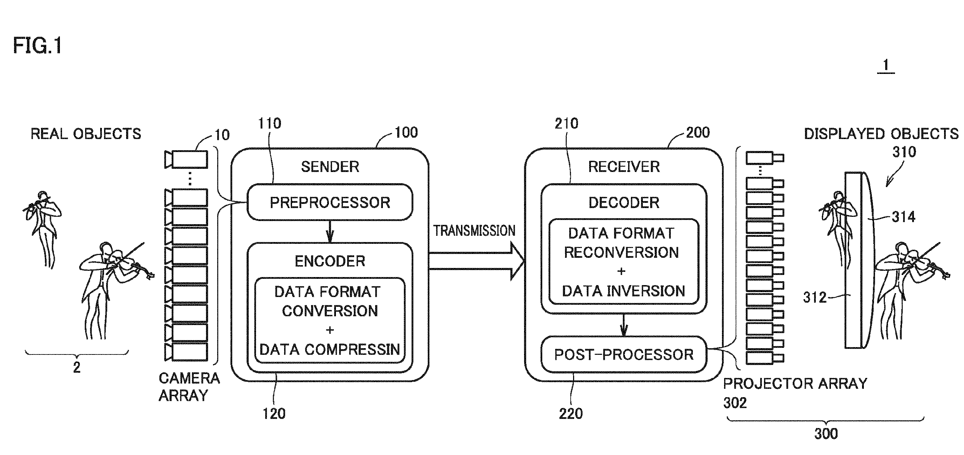

Fig. 1 is a diagram showing a 3D displays reproduction system 1 including the encoding/decoding system according to the embodiment of the present embodiment. Referring to Fig. 1, in 3D displays reproduction system 1, images of an object 2 are captured with a camera array including a plurality of cameras 10, thereby generating multi-view images. Multi-view images correspond to a group of images obtained by capturing images of object 2 from a plurality of views, respectively. The multi-view images are transmitted upon encoding in an information processing apparatus 100 functioning as a sender. Then, data generated by encoding is decoded in an information processing apparatus 200 functioning as a receiver, and object 2 is reproduced by 3D display device 300. That is, 3D display device 300 displays 3D displays of object 2. It is noted that any medium, whether wired or wireless, can be used for the data transmission from the sender to the receiver.

Information processing apparatus 100 functioning as the sender includes a preprocessor 110 which executes preprocessing on an input image, and an encoder 120 which executes encoding. Encoding executed in information processing apparatus 100 includes processing of data format conversion and data compression, as will be described below. That is, the encoder according to the embodiment of the present invention executes data format conversion and data compression in parallel.

On the other hand, information processing apparatus 200 functioning as the receiver includes a decoder 210 which executes decoding on received data, and a postprocessor 220 which executes post-processing. Decoding executed in information processing apparatus 200 includes processing of data format reconversion and data inversion, as will be described below. That is, the decoder according to the embodiment of the present invention executes data format reconversion and data inversion in parallel.

3D display device 300 includes a display screen mainly composed of a diffusion film 312 and a condenser lens 314, as well as a projector array 302 which projects multi-view images on display screen 310. Each of projectors constituting projector array 302 projects an image of a corresponding view in multi-view images output from information processing apparatus 200.

With such 3D displays reproduction system 1, a viewer who is in front of display screen 310 is provided with a reproduced 3D display of object 2. At this time, images of views entering a viewer's view are intended to be changed depending on the relative positions of display screen 310 and the viewer, giving the viewer an experience as if he/she is in front of object 2.

Such 3D displays reproduction system 1 is expected to be used for general applications in a movie theater, an amusement facility and the like, and to be used for industrial applications as a remote medical system, an industrial design system and an electronic advertisement system for public viewing or the like.

[B. Related Art]

First, a technique relevant to the encoding/decoding system according to the embodiment of the present invention will be described. Encoding and decoding in accordance with MPEG-4 AVC (ITU-T Recommendation H.264|ISO/IEC 14496-10 Advanced Video Coding), one of the video compression standards, will be described.

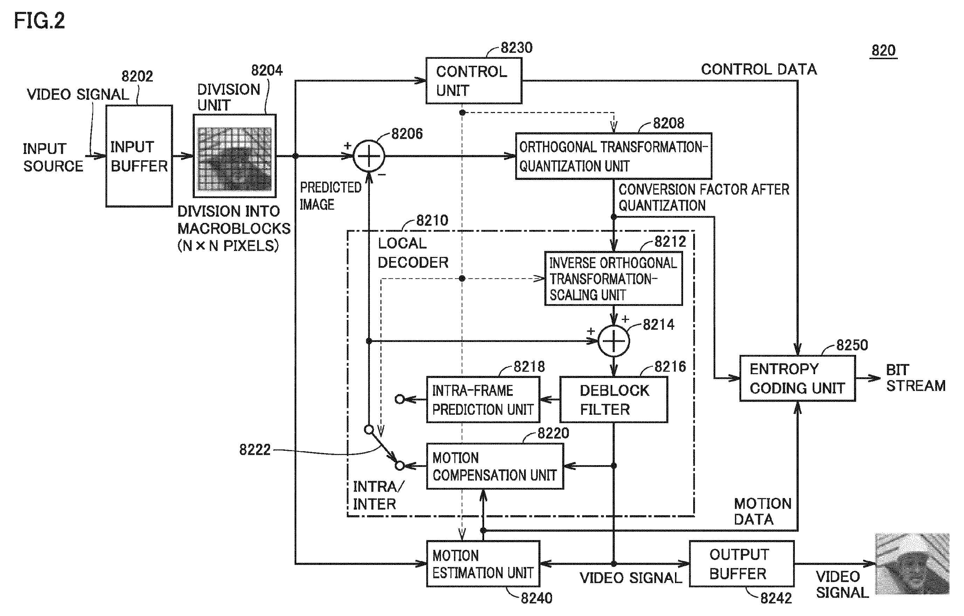

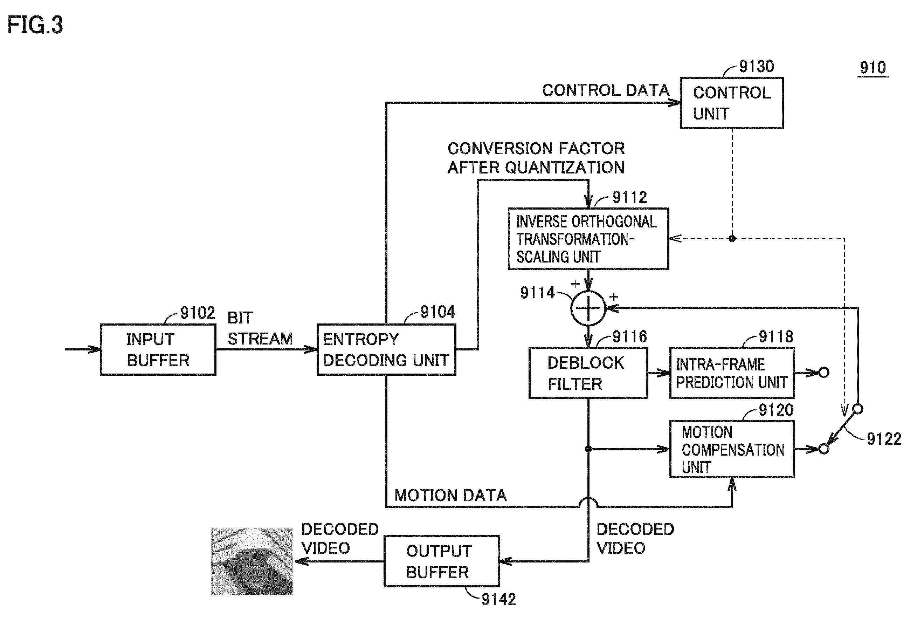

Fig. 2 is a functional block diagram of an encoder 820 according to the related art of the present invention. Fig. 3 is a functional block diagram of a decoder 910 according to the related art of the present invention.

First, encoding will be described with reference to Fig. 2. In encoder 820 shown in Fig. 2, each frame of a video signal, which is a moving picture received from an input source (i.e., a sequence of frames located in the time domain), is divided into a plurality of macroblocks, and each macroblock is interpolated using intra-frame prediction or inter-frame prediction. Intra-frame prediction is a technique for interpolating a target macroblock from other macroblocks in the same frame. On the other hand, inter-frame prediction is a technique for interpolating a target macroblock from information on another frame by means of any of forward prediction, backward prediction and bi-directional prediction.

That is, encoder 820 performs data compression paying attention to correlation (i.e., redundancy) with information on the same or an approximate frame.

More specifically, encoder 820 includes an input buffer 8202, a division unit 8204, a subtraction unit 8206, an orthogonal transformation-quantization unit 8208, a local decoder 8210, a control unit 8230, a motion estimation unit 8240, an output buffer 8242, and an entropy coding unit 8250.

Input buffer 8202 temporarily stores a video signal received from the input source. Division unit 8204 divides the video signal stored in input buffer 8202 into a plurality of macroblocks (N×N pixels). The output from division unit 8204 is supplied to subtraction unit 8206, control unit 8230 and motion estimation unit 8240.

Subtraction unit 8206 subtracts interpolation information previously calculated (intra-frame prediction or inter-frame prediction) from each macroblock received from division unit 8204, thereby calculating information on a residual value. That is, subtraction unit 8206 subtracts a predicted image from an original image, thereby generating a residual image. This processing of generating a residual image is typically executed on a macroblock basis.

Orthogonal transformation-quantization unit 8208 executes orthogonal transformation (typically, discrete Fourier transform) and quantization on the residual image received from subtraction unit 8206. Orthogonal transformation-quantization unit 8208 also executes scaling. A conversion factor after quantization received from orthogonal transformation-quantization unit 8208 is output to local decoder 8210 and entropy coding unit 8250.

Local decoder 8210 calculates interpolation information for (macroblocks of) a subsequent frame. More specifically, local decoder 8210 includes an inverse orthogonal transformation-scaling unit 8212, an addition unit 8214, a deblock filter 8216, an intra-frame prediction unit 8218, a motion compensation unit 8220, and a switching unit 8222.

Inverse orthogonal transformation-scaling unit 8212 executes inverse orthogonal transformation and scaling on the conversion factor after quantization received from orthogonal transformation-quantization unit 8208. That is, inverse orthogonal transformation-scaling unit 8212 inverses a residual image received from subtraction unit 8206. Addition unit 8214 adds the residual image received from inverse orthogonal transformation-scaling unit 8212 and a predicted image previously calculated (interpolation information). Upon receipt of the result of addition from addition unit 8214, deblock filter 8216 smoothes the block boundary so as to suppress occurrence of block noise.

That is, an original image supplied from input buffer 8202 is inversed by inverse orthogonal transformation-scaling unit 8212, addition unit 8214 and deblock filter 8216. Then, information on this inverted original image is supplied to intra-frame prediction unit 8218 and motion compensation unit 8220.

Intra-frame prediction unit 8218 generates a predicted image based on adjacent macroblocks.

Motion compensation unit 8220 generates a predicted image using inter-frame prediction. More specifically, motion compensation unit 8220 generates a predicted image based on the inverted original image and motion data received from motion estimation unit 8240.

Either of the predicted images generated by intra-frame prediction unit 8218 and motion compensation unit 8220, respectively, is selected appropriately by switching unit 8222 for supply to subtraction unit 8206.

Motion estimation unit 8240 calculates motion data (typically, moving vector) based on each macroblock received from division unit 8204 and information on the inverted original image. This motion data as calculated is output to motion compensation unit 8220 and entropy coding unit 8250.

Control unit 8230 controls operations in orthogonal transformation-quantization unit 8208, inverse orthogonal transformation-scaling unit 8212, switching unit 8222, and motion estimation unit 8240. Control unit 8230 also instructs, as control data, parameters related to coding, the order of coding of respective components, and the like.

Entropy coding unit 8250 performs entropy coding on the conversion factor after quantization received from orthogonal transformation-quantization unit 8208, the motion data received from motion compensation unit 8220, and the control data received from control unit 8230, and as a result, outputs a bit stream. This bit stream as output is a result of encoding for a video signal as input.

Although it is not an indispensable feature, output buffer 8242 temporarily stores the inverted original image (video signal) received from deblock filter 8216.

Next, decoding will be described with reference to Fig. 3. In decoder 910 shown in Fig. 3, an original image is inverted from the bit stream received from encoder 820 shown in Fig. 2. Basically, reconversion of encoding performed in encoder 820 shown in Fig. 2 is performed. More specifically, decoder 910 includes an input buffer 9102, an entropy decoding unit 9104, an inverse orthogonal transformation-scaling unit 9112, an addition unit 9114, a deblock filter 9116, an intra-frame prediction unit 9118, a motion compensation unit 9120, a switching unit 9122, a control unit 9130, and an output buffer 9142.

Input buffer 9102 temporarily stores a bit stream received from encoder 820. Entropy decoding unit 9104 performs entropy decoding on the bit stream received from input buffer 9102, and as a result, outputs motion data, a conversion factor after quantization and control data.

Inverse orthogonal transformation-scaling unit 9112 executes inverse orthogonal transformation (typically, discrete Fourier inverse transform) and scaling on the conversion factor after quantization decoded by entropy decoding unit 9104. A residual image is inverted by these operations.

Addition unit 9114 adds the residual image received from inverse orthogonal transformation-scaling unit 9112 and a predicted image previously calculated (interpolation information). Upon receipt of the result of addition from addition unit 9114, deblock filter 9116 smoothes the block boundary so as to suppress occurrence of block noise.

Intra-frame prediction unit 9118 generates a predicted image based on adjacent macroblocks.

Motion compensation unit 9120 generates a predicted image using inter-frame prediction. More specifically, motion compensation unit 9120 generates a predicted image based on the inverted original image and the motion data decoded by entropy decoding unit 9104.

Either of the predicted images generated by intra-frame prediction unit 9118 and motion compensation unit 9120, respectively, is selected appropriately by switching unit 9122 for supply to addition unit 9114.

Control unit 9130 controls operations in inverse orthogonal transformation-scaling unit 9112 and switching unit 9122 based on the control data decoded by entropy decoding unit 9104.

Output buffer 9142 temporarily stores the inverted original image (video signal) received from deblock filter 9116.

According to MPEG-4 AVC, one of the video compression standards, transmission of a moving picture is achieved with data having been compressed by the encoding/decoding system as described above.

[C. Overview]

The encoding/decoding system according to the embodiment of the present invention includes data format conversion processing that can be incorporated into the existing standard as described above. In the encoding/decoding system according to the embodiment of the present invention, the concept of remainder image is introduced to further increase data compression efficiency. That is, according to the embodiment of the present invention, using not only a residual used in the existing standards but also a remainder, the data compression efficiency can be increased, and the quality thereof can also be improved.

The encoding/decoding system according to the embodiment of the present invention is applicable to any video signal composed of a plurality of frames located in the time domain and/or the spatial domain. That is, the encoding/decoding system according to the embodiment of the present invention is targeted at a plurality of input images containing information related to each other in terms of time and/or space.

Examples can include (1) a plurality of still pictures (located in the spatial domain) generated by capturing images of an object with the camera array shown in Fig. 1, (2) a plurality of moving pictures (located in the time domain and the spatial domain) generated by capturing images of an object with the camera array shown in Fig. 1, (3) moving pictures (located in the time domain) generated by successively capturing images of an object with a single camera, (4) intensity information and depth map (located in the spatial domain) generated by capturing images of an object with a stereoscopic camera, and (5) moving pictures (intensity information and depth map) (located in the time domain and the spatial domain) generated by successively capturing images of an object with a stereoscopic camera.

These images to be processed have redundancy therebetween in association with similarity of views. In order to achieve data compression handling such redundancy, the configurations shown in Figs. 2 and 3 described above employ a data format in which each pixel value is defined by a residual corresponding to the difference between an original image and a predicted image.

On the other hand, the embodiment of the present invention employs a data format in which each pixel value is defined by a "remainder." This remainder is defined as a remainder (integer value) obtained by dividing a certain calculated value by a predetermined integer value. At this time, a quotient is also an integer. More specifically, a remainder is calculated by a modulo operation. The procedure for calculating a remainder and the like will be described later in detail.

The embodiment of the present invention may representatively employ a data format in which each pixel value is defined only by a remainder instead of a residual, or a data format in which each pixel value is defined by the combination of a remainder and a residual.

Shown below as a typical example is a configuration in which processing of data format conversion and data compression according to the embodiment of the present invention has been incorporated into the encoding/decoding system in conformance with the MPEG-4 AVC standard shown in Figs. 2 and 3. However, the configuration according to the embodiment of the present invention is not limited to this example, but can be incorporated into any encoder and decoder.

[D. Functional Configuration of Encoder 120]

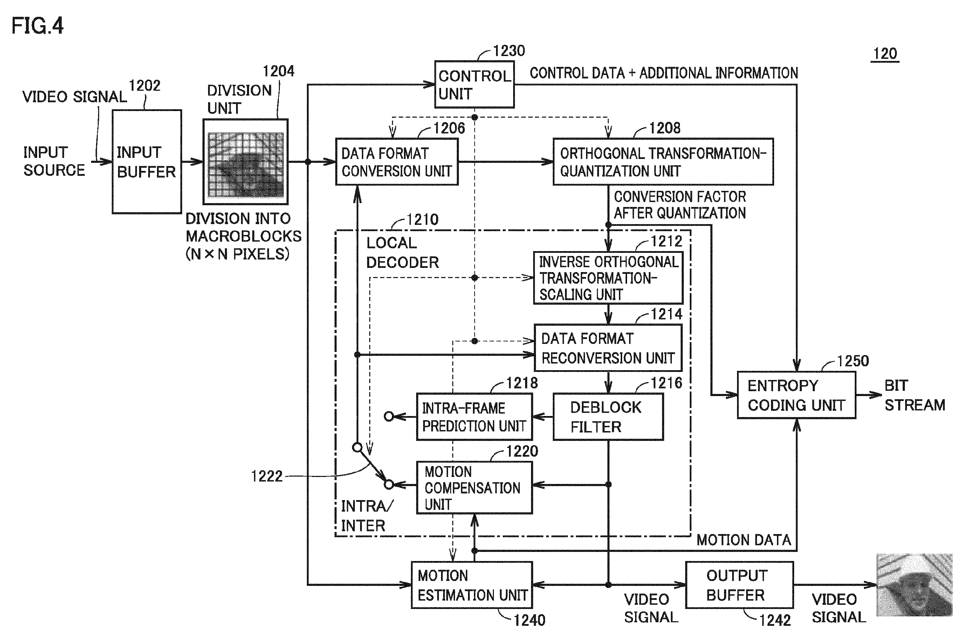

First, the functional configuration of encoder 120 constituting the encoding/decoding system according to the embodiment of the present invention will be described. Fig. 4 is a functional block diagram of encoder 120 according to the embodiment of the present invention. Referring to Fig. 4, encoder 120 includes an input buffer 1202, a division unit 1204, a data format conversion unit 1206, an orthogonal transformation-quantization unit 1208, a local decoder 1210, a control unit 1230, a motion estimation unit 1240, an output buffer 1242, and entropy coding unit 1250. Local decoder 1210 includes an inverse orthogonal transformation-scaling unit 1212, a data format reconversion unit 1214, a deblock filter 1216, an intra-frame prediction unit 1218, a motion compensation unit 1220, and a switching unit 1222.

In summary, encoder 120 differs from encoder 820 shown in Fig. 2 mainly in that data format conversion unit 1206 is provided instead of subtraction unit 8206 for generating a residual image, and data format reconversion unit 1214 is provided instead of addition unit 8214 for inverting an original image. In association with these changes in configuration, the operations of control unit 1230 also differ from those of control unit 8230.

That is, the functions of input buffer 1202, division unit 1204, orthogonal transformation-quantization unit 1208, motion estimation unit 1240, output buffer 1242, and entropy coding unit 1250 are similar to those of input buffer 1202, division unit 1204, orthogonal transformation-quantization unit 1208, motion estimation unit 1240, output buffer 8242, and entropy coding unit 8250 shown in Fig. 2. The functions of inverse orthogonal transformation-scaling unit 1212, deblock filter 1216, intra-frame prediction unit 1218, motion compensation unit 1220, and switching unit 1222 of local decoder 1210 are similar to those of inverse orthogonal transformation-scaling unit 8212, deblock filter 8216, intra-frame prediction unit 8218, motion compensation unit 8220, and switching unit 8222 of local decoder 8210 shown in Fig. 2.

[E. Procedure in Encoder 120]

Next, the procedure in encoder 120 will be described. Referring to Fig. 4, a video signal from an input source is supplied to input buffer 1202. This video signal includes multi-view images captured with plurality of cameras 10 (camera array), multi-view depth maps output from a plurality of Depth cameras, a series of still pictures or a still picture, and image data of any format. Such video signals are temporarily stored in input buffer 1202, and all or some of them are supplied to division unit 1204 as input data. Hereinafter, for ease of description, assume that a sequence of frames located in either the time domain or the spatial domain (i.e., moving pictures, multi-view still pictures or the like captured with a single camera) are subjected to processing. Needless to say, the procedure is also applicable similarly to a sequence of frames located in both of the time domain and the spatial domain. In that case, however, interpolation information will be calculated in consideration of correlation between respective frames (or macroblocks) in each of the time domain and the spatial domain.

Division unit 1204 divides a video signal (input data) received from input buffer 1202 into a plurality of macroblocks (NxN pixels). This is for accelerating processing of generating a predicted image and the like by using a partial image of suitable size as a processing unit. However, one frame may be processed as it is without division into macroblocks in consideration of computing power of an information processing apparatus, processing time requested, and the like. Each divided macroblock is supplied to data format conversion unit 1206.

Data format conversion unit 1206 performs data format conversion using macroblocks received from division unit 1204 and motion-compensated macroblocks received from intra-frame prediction unit 1218 or motion compensation unit 1220.

More specifically, motion-compensated macroblocks correspond to a motion image indicating a change component from one or more previous input images, contained in a subsequent input image, and intra-frame prediction unit 1218 or motion compensation unit 1220 estimates this motion image. First, data format conversion unit 1206 generates a residual image from the difference between a subsequent input image and an estimated motion image. Then, based on the pixel value of the residual image, data format conversion unit 1206 specifies a region of pixels constituting the residual image whose pixel value should be defined by a remainder. Data format conversion unit 1206 converts, into a remainder, the pixel value for the specified region which should be defined by a remainder. By such a procedure, a residual image after conversion is output as an image after data format conversion.

In this data format conversion, macroblocks in which part or all of pixel values have been defined by remainders are generated. The detailed procedure of this data format conversion will be described later.

Corresponding motion-compensated macroblocks supplied from intra-frame prediction unit 1218 or motion compensation unit 1220 are utilized as side information for reconstructing original macroblocks from macroblocks generated by data format conversion unit 1206.

The macroblocks after data format conversion are supplied to orthogonal transformation-quantization unit 1208. Orthogonal transformation-quantization unit 1208 executes orthogonal transformation, quantization and scaling, thereby further optimizing the macroblocks after data format conversion as received. The discrete Fourier transform is typically adopted as orthogonal transformation. A quantization table for use in quantization and a scaling factor for use in scaling may be optimized in accordance with the data format type ("type"). The conversion factor after quantization received from orthogonal transformation-quantization unit 8208 is output to local decoder 1210 (inverse orthogonal transformation-scaling unit 1212) and entropy coding unit 1250.

Inverse orthogonal transformation-scaling unit 1212 executes inverse orthogonal transformation and scaling on the conversion factor after quantization received from orthogonal transformation-quantization unit 1208. That is, inverse orthogonal transformation-scaling unit 1212 executes processing inversely to the conversion processing in orthogonal transformation-quantization unit 1208, and inverses the macroblocks after data format conversion. Furthermore, data format reconversion unit 1214 executes data format reconversion on the inverted macroblocks after data format conversion to inverse each divided macroblock.

Upon receipt of the inverted macroblocks from data format reconversion unit 1214, deblock filter 1216 smoothes the block boundary so as to suppress occurrence of block noise.

That is, the original image supplied from input buffer 1202 is inverted by inverse orthogonal transformation-scaling unit 1212, data format reconversion unit 1214 and deblock filter 1216. Then, this inverted original image is supplied to intra-frame prediction unit 1218 and motion compensation unit 1220.

Intra-frame prediction unit 1218 generates a predicted image (hereinafter also referred to as an "intra-macroblock") based on adjacent macroblocks. Motion compensation unit 1220 generates a predicted image (hereinafter also referred to as an "inter-macroblock") using inter-frame prediction. These predicted images will be motion-compensated macroblocks. Motion estimation unit 1240 calculates motion data (typically, moving vector) based on each macroblock received from division unit 1204 and the inverted original image. This motion data as calculated is output to motion compensation unit 1220 and entropy coding unit 1250.

Control unit 1230 controls operations in data format conversion unit 1206, orthogonal transformation-quantization unit 1208, inverse orthogonal transformation-scaling unit 1212, data format reconversion unit 1214, switching unit 8222, and motion estimation unit 8240. Control unit 1230 also outputs parameters related to coding, the order of coding of respective components and the like, as control data. Furthermore, control unit 1230 outputs parameters related to data format conversion (data format type "type", threshold values, flags "flag1, flag2", etc.), to entropy coding unit 1250.

Entropy coding unit 1250 encodes a residual image after conversion and additional information that specifies the region which should be defined by a remainder. More specifically, entropy coding unit 1250 performs entropy coding on the conversion factor after quantization received from orthogonal transformation-quantization unit 1208, the motion data received from motion estimation unit 1240, as well as the parameters and control data received from control unit 1230, and as a result, outputs a bit stream. This bit stream as output is a result of encoding for a video signal as input.

Although it is not an indispensable feature, output buffer 1242 temporarily stores the inverted original image (video signal) received from deblock filter 1216.

Main components in the above-described functional configuration will be described below in more detail.

[F. Processing in Data Format Conversion Unit 1206]

Next, the processing in data format conversion unit 1206 (Fig. 4) according to the embodiment of the present invention will be described in detail.

(f1: Data Format Type)

As described above, in the embodiment of the present invention, both the configuration of defining only by a remainder and the configuration of defining by the combination of remainders and residuals can be employed. In the latter case, both of (1) the combination of remainders and residuals on a pixel basis and (2) the combination of remainders and residuals (or all zero) on a macroblock basis can further be employed.

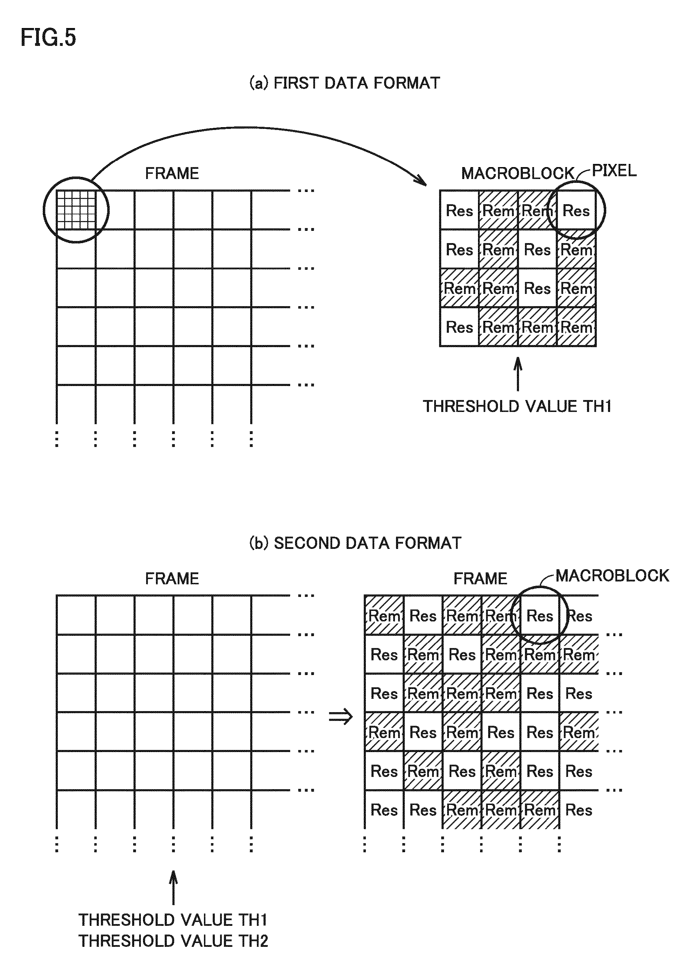

Fig. 5 illustrates techniques for combining remainders and residuals according to the embodiment of the present invention. Fig. 5 shows at (a) a technique for combining remainders and residuals on a pixel basis, and Fig. 5 shows at (b) a technique for combining remainders and residuals on a macroblock basis. It is noted that, in Fig. 5, "Rem" indicates a remainder, and "Res" indicates a residual.

As shown in Fig. 5 at (a), each frame is processed upon division into a plurality of macroblocks. Applying predetermined evaluation criteria (typically, a threshold value TH1 which will be described later), it is determined by which of a remainder and a residual each of a plurality of pixels constituting each macroblock should be defined.

On the other hand, as shown in Fig. 5 at (b), applying predetermined evaluation criteria (typically, threshold values TH1 and TH2 which will be described later), it is determined which of a remainder (remainder macroblock) and a residual (residual macroblock) is used for each of a plurality of macroblocks constituting a frame.

For a pixel or macroblock determined that it should be defined by a remainder, the pixel value thereof is calculated using a modulo operation which will be described later.

It is noted that when definition is given only by a remainder, a remainder is calculated for each pixel/macroblock omitting the application of the evaluation criteria as mentioned above.

(f2: Overview of Processing in Data Format Conversion Unit)

Since there are a plurality of types of macroblocks after data format conversion output from data format conversion unit 1206 as described above, information indicating the procedure of this data format conversion (data format type "type") is used as part of side information. However, side information may not be included for a region to be defined by a residual. That is, it is implied that a region (pixel or macroblock) for which corresponding side information exists has been defined by a remainder.

Data format conversion unit 1206 executes data format conversion on the difference (i.e., residual image) between an original macroblock and a motion-compensated macroblock (intra-macroblock generated by intra-frame prediction unit 1218 or inter-macroblock generated by motion compensation unit 1220) in the same frame. For a region defined by a remainder, a motion-compensated macroblock is also used as side information.

Moreover, in order to determine a factor (denominator) for use in a modulo operation for calculating a remainder, a gradient-like macroblock for a motion-compensated macroblock (intra-macroblock or inter-macroblock) or a macroblock containing information similar thereto is generated. It is noted that information on the gradient may be calculated on a frame basis.

Detailed processing for a data format in which a remainder and a residual are combined on a pixel basis (hereinafter also referred to as a "first data format") and a data format in which a remainder and a residual are combined on a macroblock basis (hereinafter also referred to as a "second data format") will be described below. It is noted that, in the following description, it is obvious that a data format in which the pixel value is defined only by a remainder can be achieved by eliminating processing related to calculation of a residual.

(f3: Data Format Conversion Unit 1206 (for First Data Format))

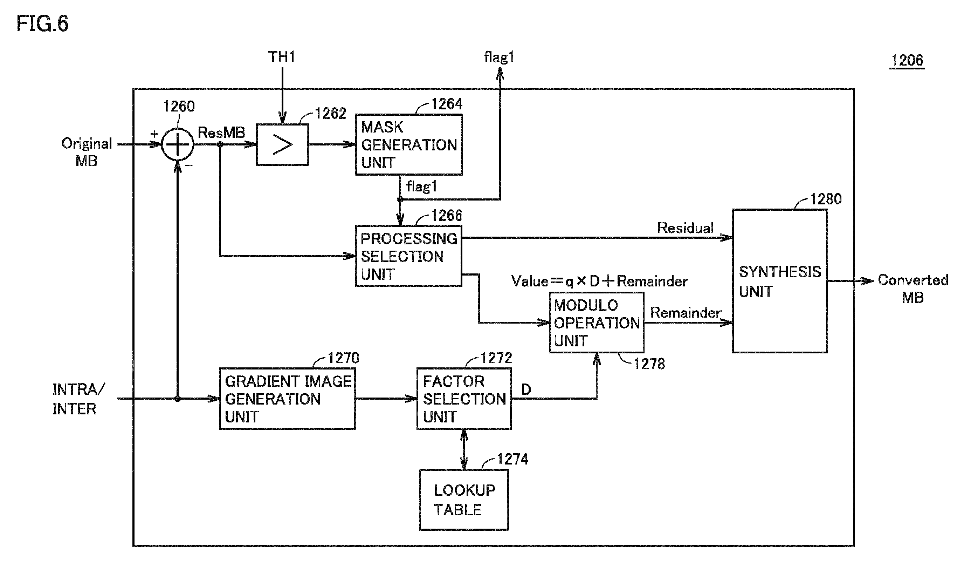

Fig. 6 is a functional block diagram of data format conversion unit 1206 according to the embodiment of the present invention. Referring to Fig. 6, data format conversion unit 1206 includes a subtraction unit 1260, a comparison unit 1262, a mask generation unit 1264, a processing selection unit 1266, a gradient image generation unit 1270, a factor selection unit 1272, a Lookup table 1274, a modulo operation unit 1278, and a synthesis unit 1280.

Subtraction unit 1260 subtracts a motion-compensated macroblock (intra-macroblock or inter-macroblock) (denoted as "Inter/Intra MB" in Fig. 6) from an original macroblock (denoted as "Original MB" in Fig. 6) received from division unit 1204 (Fig. 4), thereby generating a residual macroblock (denoted as "Res MB" in Fig. 6).

Comparison unit 1262 and mask generation unit 1264 specify a pixel defined by a residual in a target macroblock. That is, comparison unit 1262 determines a region which should be defined by a remainder on a pixel basis based on the magnitude of the pixel value of each of pixels constituting a residual image (residual macroblock). Mask generation unit 1264 outputs, as additional information, information for specifying each pixel defined by a remainder among the pixels constituting the residual image.

More specifically, comparison unit 1262 compares the pixel value of each pixel constituting a target macroblock and threshold value TH1 which is part of side information. Mask generation unit 1264 determines that a pixel whose pixel value is less than threshold value TH1 should be defined by a remainder, and determines that other pixels should be defined by a residual. That is, since information on a region whose pixel value is small in a residual macroblock may be lost greatly, data compression is performed upon conversion into the data format in which definition is given by a remainder rather than a residual.

This information indicating by which of a remainder and a residual each pixel is to be defined is included in side information as a flag "flag 1". Mask generation unit 1264 generates, in a target frame, a mask (map) obtained by developing the value of flag "flag 1" for each pixel, and outputs the mask (map) to processing selection unit 1266 and to control unit 1230. Based on the value of flag "flag 1" received from mask generation unit 1264, the procedure to be applied to each pixel in encoding and decoding is determined.

In data format conversion unit 1206, processing selection unit 1266 selects processing for each of pixels constituting a target macroblock based on the value of flag "flag 1". Specifically, processing selection unit 1266 directly outputs the pixel value of a pixel determined that it should be defined by a residual (denoted as "Residual" in Fig. 6) to synthesis unit 1280, and outputs the pixel value of a pixel determined that it should be defined by a remainder (denoted as "Remainder" in Fig. 6) to modulo operation unit 1278.

Modulo operation unit 1278 executes a modulo operation on the pixel value for the region which should be defined by a remainder. More specifically, modulo operation unit 1278 performs a modulo operation using a factor D (integer) set by factor selection unit 1272 as a denominator to calculate a remainder. This calculated remainder is output to synthesis unit 1280. Synthesis unit 1280 combines the remainder or residual input for each pixel, and outputs a macroblock after data format conversion (denoted as "Converted MB" in Fig. 6).

In data format conversion unit 1206, factor (denominator) D for use in the modulo operation in modulo operation unit 1278 may be varied dynamically based on a motion-compensated macroblock. A region where the pixel value is large in a motion-compensated macroblock means a region where redundancy between frames is relatively small. For such a region, it is preferable that information contained therein be maintained even after data format conversion. Therefore, suitable factor D is selected in accordance with the magnitude of redundancy between frames.

As a method for dynamically varying such factor D, any method can be employed. Fig. 6 shows an example of processing of obtaining gradient information on a motion-compensated macroblock (motion image) and determining the value for use as a modulus in a modulo operation based on the obtained gradient information. More specifically, a gradient-like macroblock for a motion-compensated macroblock is generated, and factor D for use as a modulus is determined in accordance with the magnitude of the pixel value of each pixel in this gradient-like macroblock.

Specifically, gradient image generation unit 1270 generates a gradient-like macroblock for a motion-compensated macroblock. Then, the value for use as a modulus in a modulo operation may be determined with reference to a predetermined correspondence between the gradient and the value for use as a modulus in a modulo operation. More specifically, with reference to Lookup table 1274, factor selection unit 1272 determines factor D for each pixel based on the pixel value (gradient) of each pixel of the generated gradient-like macroblock. Through the use of Lookup table 1274, factor D can be determined nonlinearly for the gradient-like macroblock. By thus determining factor D nonlinearly, the image quality after decoding can be improved.

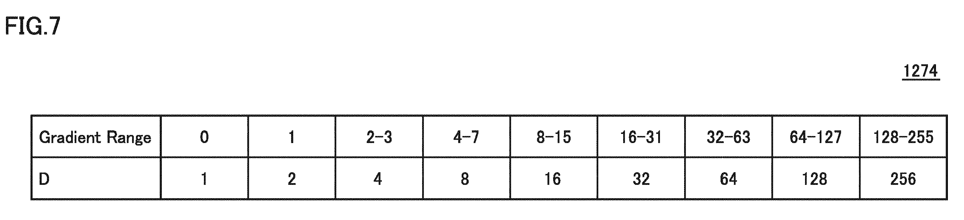

Fig. 7 is a diagram showing an example of Lookup table 1274 for determining factor D for use in calculation of a remainder according to the embodiment of the present invention. As shown in Fig. 7, discretization into a plurality of levels (gradient ranges) is carried out in accordance with the gradient, and factor D for each level is selected. Gradient image generation unit 1270 selects factor D corresponding to each pixel of a target macroblock, with reference to Lookup table 1274. Here, factor D is determined for each pixel of each color component included in the target macroblock.

In Lookup table 1274 shown in Fig. 7, a value (factor D) to be used as the modulus in the modulo operation is designed to be a power of two. By assigning factor D in this way, the modulo operation can be accelerated. Since Lookup table 1274 can be designed optionally, a Lookup table with a smaller number of levels or a larger number of levels may be adopted.

Alternatively, it is not always necessary to use a Lookup table, but factor D may be determined using a predetermined function or the like. For example, the pixel value of each pixel in a gradient-like macroblock may be used as factor D as it is.

For pixels output sequentially from processing selection unit 1266, modulo operation unit 1278 performs a modulo operation on their pixel values using corresponding factor D as a modulus. More specifically, a minimum m with which a pixel value Value = $q \times D + m$ ($q \geq 0$, $D > 0$) holds for each pixel is determined. Herein, q is a quotient, and m is a remainder.

Since "pixel value P = $k \times D + m$" is calculated in processing of reconstructing macroblocks (decoding) which will be described later, remainder m (Remainder) calculated for each pixel per color component is output.

A method for generating a gradient-like macroblock in gradient image generation unit 1270 will now be described. More specifically, gradient image generation unit 1270 generates a gradient-like macroblock indicating the degree of change on an image space, from a motion-compensated macroblock (intra-macroblock or inter-macroblock) serving as side information. The gradient-like macroblock refers to an image having a larger intensity in a region with a larger textural change in the motion-compensated macroblock. Any filtering process can be used as the processing of generating the gradient-like macroblock. The value of each pixel constituting the gradient-like macroblock is normalized so as to have any integer value within a predetermined range (e.g., 0 to 255). Typically, the gradient-like macroblock is generated by the following procedure.

(i) Apply Gaussian filtering to a gradient-like macroblock to remove noise (Gaussian smoothing).
(ii) Split filtered side information to color components (i.e., a gray scale image is generated for each color component).
(iii) Execute operations of (c1) to (c4) for the gray scale image of each color component.

    (iii-1) Edge detection
    (iii-2) Gaussian smoothing (once or more) (or Median filter)
    (iii-3) a series of morphological operations (e.g., dilation (once or more), erosion (once or more), dilation (once or more))
    (iii-4) Gaussian smoothing (once or more).

Through the operations as described above, a gradient-like macroblock is generated for each color component constituting a motion-compensated macroblock.

The procedure described herein is merely an example, and the details of processing, procedure and the like of Gaussian smoothing and morphological operations can be designed appropriately.

Furthermore, any method may be adopted as long as macroblocks can be generated in which a larger pixel value (intensity) is assigned to a region where a larger change in intensity has occurred within a motion-compensated macroblock. As an example, a sobel filter may be applied to each of x and y directions, and the average value of the application result may be used as a macroblock.

(f4: Data Format Conversion Unit 1206 (for Second Data Format))

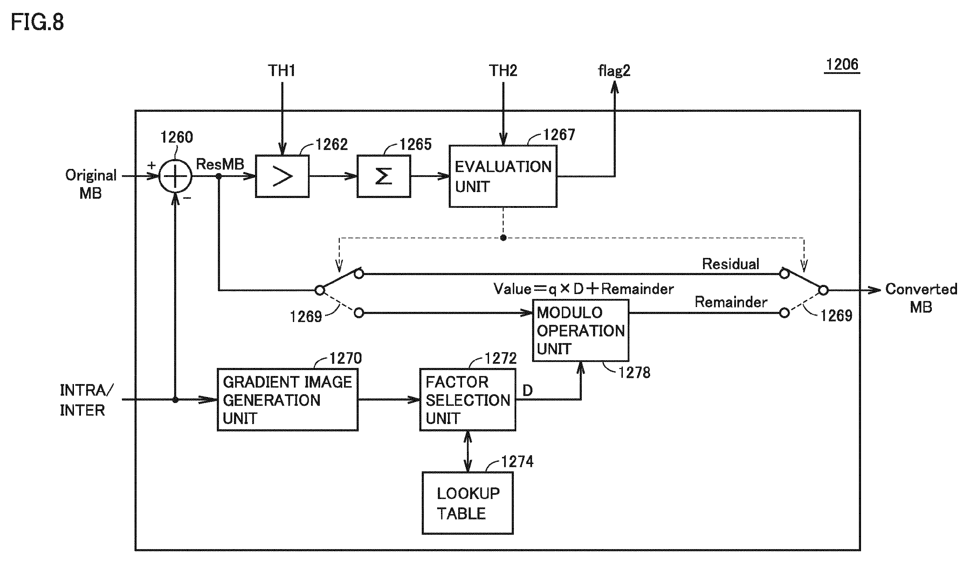

Fig. 8 is another functional block diagram of data format conversion unit 1206 according to the embodiment of the present invention. Referring to Fig. 8, data format conversion unit 1206 is provided with an integration unit 1265, an evaluation unit 1267 and a switching unit 1269 instead of mask generation unit 1264, processing selection unit 1266 and synthesis unit 1280, as compared with data format conversion unit 1206 shown in Fig. 6. The remaining components have been described above in detail, and the details thereof will not be repeated.

Comparison unit 1262, integration unit 1265 and evaluation unit 1267 determine by which of a residual and a remainder a target macroblock should be defined. That is, for each of blocks obtained by dividing a residual image (residual macroblock) into predetermined size, comparison unit 1262, integration unit 1265 and evaluation unit 1267 determine on a block basis a region which should be defined by a remainder based on a result of combining evaluations of pixel values of respective pixels constituting a block concerned. Evaluation unit 1267 outputs, as additional information, information for specifying a block defined by a remainder among blocks included in a residual image.

More specifically, comparison unit 1262 compares the pixel value of each pixel constituting a residual macroblock and threshold value TH1 which is part of side information. Then, for a pixel whose pixel value exceeds threshold value TH1, comparison unit 1262 outputs the difference between the pixel value and threshold value TH1 to integration unit 1265. That is, for each residual macroblock, integration unit 1265 calculates the total sum of "pixel value - threshold value TH1" ($\Sigma$(pixel value - threshold value TH1)) for pixels whose pixel values exceed threshold value TH1.

Evaluation unit 1267 compares the calculated total sum with threshold value TH2, and determines by which of a residual and a remainder definition should be given for a target residual macroblock. Specifically, if the calculated total sum is more than or equal to threshold value TH2, evaluation unit 1267 determines that the target residual macroblock is output as it is. On the other hand, if the calculated total sum is less than threshold value TH2, evaluation unit 1267 determines that the target residual macroblock is output upon conversion into a remainder macroblock. That is, since information on a macroblock may be greatly lost if it is determined that a residual macroblock is composed of pixels of relatively small pixel values, conversion is made into a data format in which definition is given by a remainder, rather than a residual.

Furthermore, evaluation unit 1267 supplies an instruction to switching unit 1269 based on this determination. More specifically, when it is determined that the target residual macroblock is output as it is, switching unit 1269 enables a path for bypassing modulo operation unit 1278. On the other hand, when it is determined that the target residual macroblock is output upon conversion into a remainder macroblock, switching unit 1269 enables a path for supplying the residual macroblock to modulo operation unit 1278.

The information on this macroblock as to by which of a remainder and a residual definition is to be given is included in side information as flag "flag 2". Based on the value of flag "flag 2" received from mask generation unit 1264, the procedure to be applied to each macroblock in encoding and decoding is determined.

In the case of using a remainder macroblock as a macroblock after data format conversion, compression is performed in the form of lossy compression. Thus, when inversing this macroblock in local decoder 1210 (Fig. 4), processing in deblock filter 1216 may be bypassed. This can reduce production of noise.

[G. Orthogonal Transformation-Quantization Unit 1208]

Processing in orthogonal transformation-quantization unit 1208 (Fig. 4) according to the embodiment of the present invention will now be described in detail. Orthogonal transformation-quantization unit 1208 executes orthogonal transformation, quantization and scaling on macroblocks after data format conversion received from data format conversion unit 1206.

The type of this orthogonal transformation and quantization may be dynamically changed in accordance with the data format type of macroblocks output from data format conversion unit 1206. For example, a technique similar to that used in the related art may be applied to a region defined by a residual, while parameters related to orthogonal transformation, quantization and scaling may further be adjusted for a region defined by a remainder.

[H. Processing in Data Format Reconversion Unit 1214]

Processing in data format reconversion unit 1214 (Fig. 4) according to the embodiment of the present invention will now be described in detail.

(h1 : Overview of Processing in Data Format Reconversion Unit)

Since there are a plurality of types of macroblocks after data format conversion output from data format conversion unit 1206 as described above, the procedure of data format reconversion is selected based on the data format type included in side information.

For a region defined by a residual, data format reconversion unit 1214 inverts an original macroblock by adding a motion-compensated macroblock (intra-macroblock generated in intra-frame prediction unit 1218 or inter-macroblock generated in motion compensation unit 1220) in the same frame.

On the other hand, for a region defined by a remainder, a motion-compensated macroblock is also used as side information. More specifically, in order to determine a factor (denominator) for use in an inverse modulo operation for estimating an original pixel value from a remainder, a gradient-like macroblock for a motion-compensated macroblock or a macroblock containing information similar thereto is generated.

Although the first data format in which a remainder and a residual are combined on a pixel basis and the second data format in which a remainder and a residual are combined on a macroblock basis may be present for macroblocks after data format conversion as described above, similar data format reconversion (inverting processing) is basically applied to any macroblock. It is noted that, in the following description, it is obvious that data format reconversion (inverting processing) for macroblocks after data format conversion defined only by a remainder can be achieved by eliminating processing related to calculation of a residual.

(h2: Data Format Reconversion Unit 1214)

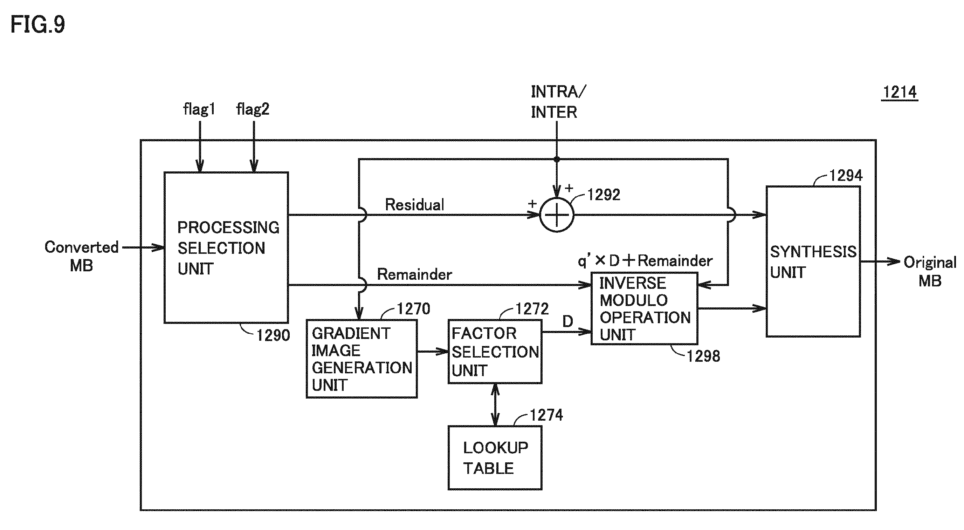

Fig. 9 is a functional block diagram of data format reconversion unit 1214 according to the embodiment of the present invention. Referring to Fig. 9, data format reconversion unit 1214 includes a processing selection unit 1290, an addition unit 1292, gradient image generation unit 1270, factor selection unit 1272, Lookup table 1274, an inverse modulo operation unit 1298, and a synthesis unit 1294. It is noted that components executing operations similar to those of the components constituting data format conversion unit 1206 shown in Fig. 6 are denoted by the same reference characters.

Based on flag "flag 1" and/or flag "flag 2" constituting part of side information, processing selection unit 1290 determines the data format type for macroblocks after data format conversion (inversed by inverse orthogonal transformation-scaling unit 1212), and specifies regions (pixels/macroblocks) defined by a remainder and a residual, respectively. Then, processing selection unit 1290 outputs a pixel value included in the region defined by a residual to addition unit 1292, and outputs a pixel value included in the region defined by a residual to inverse modulo operation unit 1298.

Addition unit 1292 adds the pixel value in a motion-compensated macroblock corresponding to a pixel location of a pixel whose pixel value has been output from processing selection unit 1290, to the output pixel value. Through this addition processing, a corresponding pixel value of an original macroblock is inverted. Addition unit 1292 outputs this calculation result to synthesis unit 1294.

On the other hand, inverse modulo operation unit 1298 estimates a corresponding pixel value of the original macroblock by an inverse modulo operation based on the pixel value (remainder) received from processing selection unit 1290 and factor D used when calculating that remainder. Factor D required for this inverse modulo operation is determined in accordance with processing similar to the processing of calculating a remainder in data format conversion unit 1206. That is, gradient image generation unit 1270 generates a gradient-like macroblock for a motion-compensated macroblock, and factor selection unit 1272 determines factor D for each pixel with reference to Lookup table 1274 based on the pixel value (gradient) of each pixel of the generated gradient-like macroblock. Since the operations performed by gradient image generation unit 1270, factor selection unit 1272 and Lookup table 1274 have been described with reference to Fig. 6, detailed description thereof will not be repeated.

Inverse modulo operation unit 1298 performs an inverse modulo operation using factor D and a remainder (Remainder) selected for each pixel, as well as a corresponding pixel value SI of a motion-compensated macroblock. More specifically, inverse modulo operation unit 1298 calculates a list of candidate values $C(q')$ for a corresponding pixel value of an original macroblock in accordance with the expression $C(q') = q' \times D + \text{Remainder}$ (where $q' \geq 0$, $C(q') < 256$), and among these calculated candidate values $C(q')$, one with the smallest difference from corresponding pixel value SI of a motion-compensated macroblock is determined as a corresponding pixel value of an original macroblock.

For example, considering the case where factor D = 8, remainder m = 3, and corresponding pixel value SI of a motion-compensated macroblock is equal to 8, candidate values $C(q')$ are obtained as follows:

$$\text{Candidate value } C(0) = 0 \times 8 + 3 = 3 \qquad (\text{difference from } SI = 5)$$

$$\text{Candidate value } C(1) = 1 \times 8 + 3 = 11 \qquad (\text{difference from } SI = 3)$$

$$\text{Candidate value } C(2) = 2 \times 8 + 3 = 19 \qquad (\text{difference from } SI = 11)$$

...

Among these candidate values C(q'), candidate value C(1) with the smallest difference from corresponding pixel value SI of a motion-compensated macroblock is selected, and the corresponding pixel value of an original macroblock is determined as "11". The pixel value of each pixel of an original macroblock is thereby determined by each color component. This calculated pixel value is output to synthesis unit 1294. Synthesis unit 1294 combines remainders or residuals received for respective pixels, and outputs an original macroblock (Original MB).

[I. Functional Configuration of Decoder 210]

A functional configuration of decoder 210 (Fig. 1) constituting the encoding/decoding system according to the embodiment of the present invention will now be described.

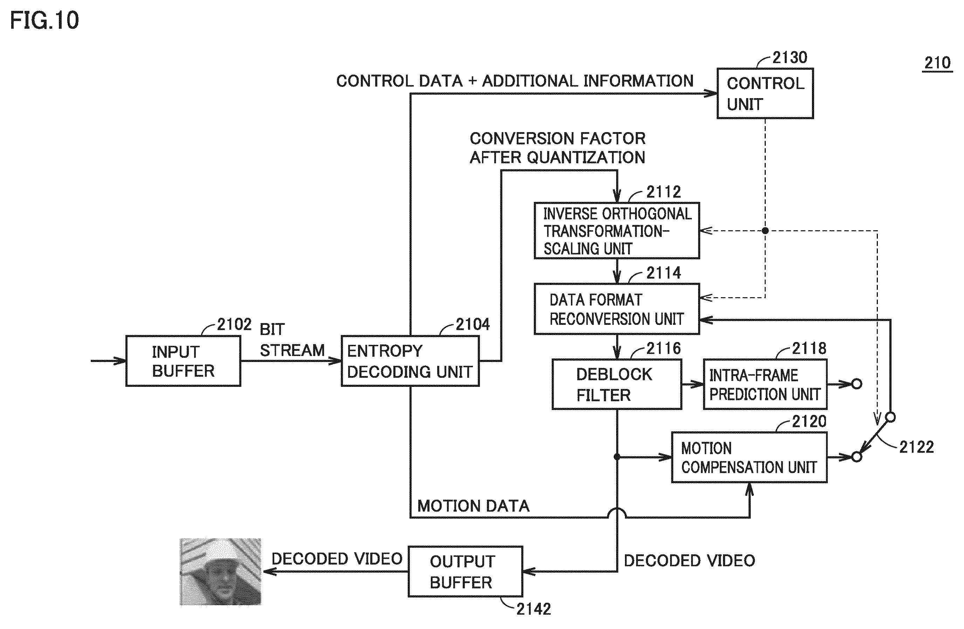

Fig. 10 is a functional block diagram of decoder 210 according to the embodiment of the present invention. Referring to Fig. 10, decoder 210 includes an input buffer 2102, an entropy decoding unit 2104, an inverse orthogonal transformation-scaling unit 2112, a data format reconversion unit 2114, a deblock filter 2116, an intra-frame prediction unit 2118, a motion compensation unit 2120, a switching unit 2122, a control unit 2130, and an output buffer 2142.

In summary, decoder 210 is different from decoder 910 shown in Fig. 3 mainly in that data format reconversion unit 2114 is provided instead of addition unit 9114 for adding a residual image and a predicted image previously calculated (interpolation information). However, in association with these changes in configuration, the operations of control unit 1230 also differ from those of control unit 9130.

That is, the functions of input buffer 2102, entropy decoding unit 2104, inverse orthogonal transformation-scaling unit 2112, deblock filter 2116, intra-frame prediction unit 2118, motion compensation unit 2120, switching unit 2122, control unit 2130, and output buffer 2142 are similar to those of input buffer 9102, entropy decoding unit 9104, inverse orthogonal transformation-scaling unit 9112, deblock filter 9116, intra-frame prediction unit 9118, motion compensation unit 9120, switching unit 9122, control unit 9130, and output buffer 9142 shown in Fig. 3.

[J. Procedure in Decoder 210]

The procedure in decoder 210 will now be described. In decoder 210, an original image is inverted from a bit stream received from encoder 120 shown in Fig. 4. Referring to Fig. 10, a bit stream is supplied to input buffer 2102. Input buffer 2102 temporarily stores the supplied bit stream. Entropy decoding unit 2104 performs entropy decoding on the bit stream received from input buffer 2102, and as a result, outputs motion data, a conversion factor after quantization as well as control data and parameters. The motion data is supplied to motion compensation unit 2120.

Inverse orthogonal transformation-scaling unit 2112 executes inverse orthogonal transformation (typically, discrete Fourier inverse transform) and scaling on the conversion factor after quantization decoded by entropy decoding unit 2104. Macroblocks after data format conversion are inverted by these operations. Then, data format reconversion is executed on the macroblocks after data format conversion by data format reconversion unit 2114, and upon receipt of the result, deblock filter 2116 smoothes the block boundary so as to suppress occurrence of block noise. An original image is inverted by these operations.

Intra-frame prediction unit 2118 generates a predicted image based on adjacent macroblocks.

Motion compensation unit 2120 generates a predicted image using inter-frame prediction. More specifically, motion compensation unit 2120 generates a predicted image based on the inverted original macroblocks and the motion data decoded by entropy decoding unit 2104.

Either of the predicted images generated by intra-frame prediction unit 2118 and motion compensation unit 2120, respectively, is selected appropriately by switching unit 2122 for supply to data format reconversion unit 2114.

Control unit 2130 controls operations in inverse orthogonal transformation-scaling unit 2112, data format reconversion unit 2114 and switching unit 2122 based on the control data and parameters decoded by entropy decoding unit 9104.

Output buffer 2142 temporarily stores the original image (video signal) inverted from deblock filter 2116.

[K. Parameters and Side Information]

Parameters and side information used in the encoding/decoding system according to the embodiment of the present invention will now be described in detail.

First, as described above, in the embodiment of the present invention, a region to be defined by a remainder in macroblocks after data format conversion is specified using flag "flag 1" and/or flag "flag 2". In other words, by disabling both of flag "flag 1" and flag "flag 2", it is specified that all the regions are to be defined by residuals. In such a case where all the regions are to be defined by residuals, that is, data format conversion is not carried out, encoder 120 (more specifically, control unit 1230) and decoder 210 (more specifically, control unit 2130) perform operations in conformance with a standard such as MPEG-4 AVC, for example.

On the other hand, in the case where data format conversion according to the embodiment of the present invention is carried out, parameters, such as type "type", threshold values TH1, TH2 and remainder operation parameter "a" are used in addition to above-described flags "flag1" and "flag2".

First, type "type" corresponds to a parameter indicating which of the first data format (Fig. 5(a)) in which a remainder and a residual are combined on a pixel basis and the second data format (Fig. 5(b)) in which a remainder and a residual are combined on a macroblock basis has been selected.

Since type "type" only needs to specify which data format has been selected, it is sufficient that information on a single bit (1 bit) be assigned. The following parameters are used in accordance with the data format selected.

(i) First Data Format

(A) Flag "flag 1"

Flag "flag 1" is assigned to each pixel constituting a macroblock, and each flag "flag 1" indicates by which of a remainder and a residual a corresponding pixel is to be defined. As an alternative configuration, by assigning flag "flag 1" to only one of a remainder and a residual and not assigning flag "flag 1" to the other one, it can be specified by which of a remainder and a residual each pixel is to be defined.

(B) Threshold Value TH1

Threshold value TH1 is used as an evaluation criterion for determining by which of a remainder and a residual each of a plurality of pixels constituting each macroblock should be defined. That is, threshold value TH1 is an evaluation criterion for specifying a region whose pixel value should be defined by a remainder among pixels constituting a residual image (residual macroblock), and this threshold value TH1 is transmitted to the decoder side as additional information.

(C) Remainder Operation Parameter "a"

Remainder operation parameter "a" is a parameter for determining factor D for use in modulo operation unit 1278 (Fig. 6). As an example, a threshold value for a gradient-like macroblock generated in gradient image generation unit 1270 (Fig. 4) may be used as remainder operation parameter "a". That is, a threshold value which determines each gradation in Lookup table 1274 as shown in Fig. 7 will be remainder operation parameter "a".

Alternatively, a plurality of Lookup tables as shown in Fig. 7 may be prepared, and an identifier indicating which Lookup table is to be selected may be used as remainder operation parameter "a".

(ii) First Data Format

(A) Flag "flag 2"

Flag "flag 2" is assigned to each pixel constituting a macroblock, and each flag "flag 2" indicates by which of a remainder and a residual a corresponding macroblock is to be defined. As an alternative configuration, by assigning flag "flag 2" to only one of a remainder and a residual and not assigning flag "flag 2" to the other one, it can be specified by which of a remainder and a residual each macroblock is to be defined.

(B) Threshold Value TH2

Threshold value TH2 is used as an evaluation criterion for determining by which of a remainder and a residual each macroblock should be defined. Threshold value TH1 is also used in this determination.

(C) Remainder Operation Parameter "a"

Similarly to remainder operation parameter "a" used for the above-described first data format, remainder operation parameter "a" includes a threshold value for a gradient-like macroblock or an identifier indicating which Lookup table used is to be selected.

It is noted that rate-distortion optimization may be executed in encoder 120. At this time, it is preferable that threshold value TH1 and/or threshold value TH2 for determining by which of a remainder and a residual definition should be given be also subjected to this optimization. By this optimization, performance can be improved more.

[L. Hardware Configuration]

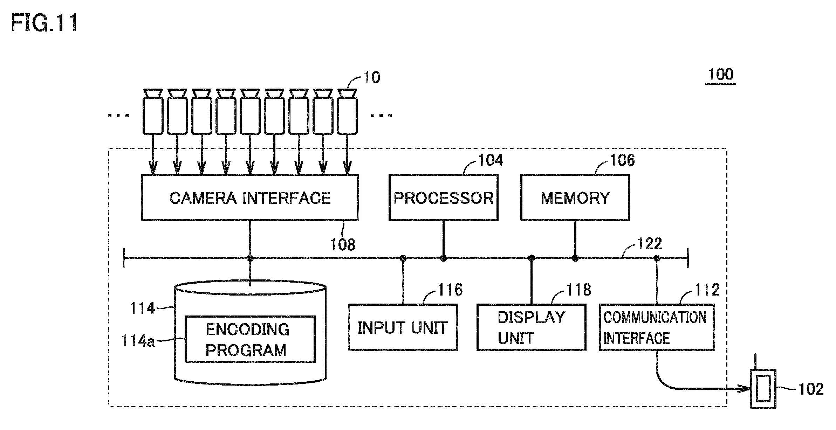

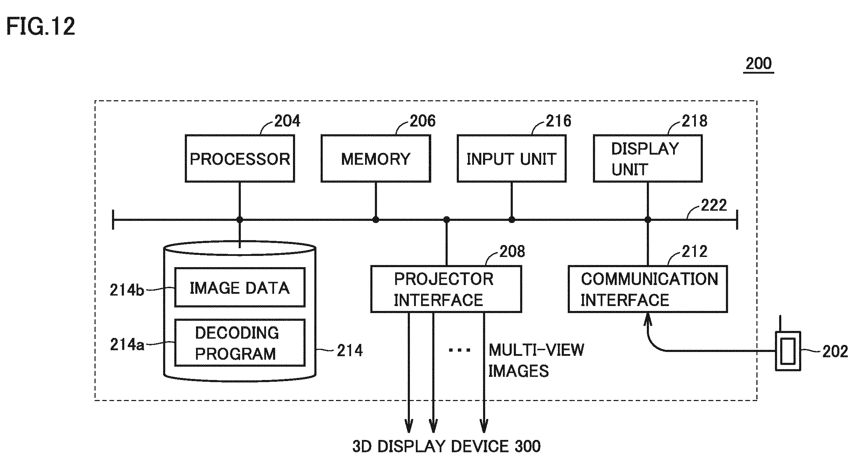

Next, an exemplary configuration of hardware for achieving the sender and receiver as described above will be described. Fig. 11 is a schematic view showing a hardware configuration of information processing apparatus 100 functioning as a sender. Fig. 12 is a schematic view showing a hardware configuration of information processing apparatus 200 functioning as a receiver.

Referring to Fig. 11, information processing apparatus 100 includes a processor 104, a memory 106, a camera interface 108, a communication interface 112, a hard disk 114, an input unit 116, and a display unit 118. These respective components are configured to be capable of making data communications with one another through a bus 122.

Processor 104 reads a program stored in hard disk 114 or the like, and expands the program in memory 106 for execution, thereby achieving the encoding process according to the embodiment of the present invention. Memory 106 functions as a working memory for processor 104 to execute processing.

Camera interface 108 is connected to plurality of cameras 10, and acquires images captured by respective cameras 10. The acquired images may be stored in hard disk 114 or memory 106. Hard disk 114 holds, in a nonvolatile manner, an encoding program 114a for achieving the above-described encoding process.

Input unit 116 typically includes a mouse, a keyboard and the like to accept user operations. Display unit 118 informs a user of a result of processing and the like.

Communication interface 112 is connected to wireless transmission device 102 and the like, and outputs data output as a result of processing executed by processor 104, to wireless transmission device 102.

Referring to Fig. 12, information processing apparatus 200 includes a processor 204, a memory 206, a projector interface 208, a communication interface 212, a hard disk 214, an input unit 216, and a display unit 218. These respective components are configured to be capable of making data communications with one another through a bus 222.

Processor 204, memory 206, input unit 216, and display unit 218 are similar to processor 104, memory 106, input unit 116, and display unit 118 shown in Fig. 11, respectively, and therefore, a detailed description thereof will not be repeated.

Projector interface 208 is connected to 3D display device 300 to output multi-view images inverted by processor 204 and the like to 3D display device 300.

Communication interface 212 is connected to wireless transmission device 202 and the like to receive a bit stream transmitted from information processing apparatus 100 and output the bit stream to processor 204.

Hard disk 214 holds, in a nonvolatile manner, a decoding program 214a for achieving decoding and image data 214b containing inverted original images.

The hardware itself and its operation principle of each of information processing apparatuses 100 and 200 shown in Figs. 11 and 12, respectively, are common. The essential part for achieving encoding/decoding according to the embodiment of the present invention is software (instruction codes), such as encoding program 114a and decoding program 214a stored in storage media such as a hard disk, or the like. Such encoding program 114a and decoding program 214a are distributed upon storage in a storage medium, such as an optical storage medium, a magnetic storage medium or a semiconductor storage medium. The storage medium for storing such programs may also be included in the scope of the invention of the present application.

Encoding program 114a and/or decoding program 214a may be implemented such that processing is executed using modules offered by OS (Operating System). In this case, encoding program 114a and/or decoding program 214a will not include some modules. Such a case, however, is also included in the technical scope of the invention of the present application.

All or some of functions of information processing apparatus 100 and/or information processing apparatus 200 may be implemented by using a dedicated integrated circuit such as ASIC (Application Specific Integrated Circuit) or may be implemented by using programmable hardware such as FPGA (Field-Programmable Gate Array) or DSP (Digital Signal Processor).

## EP 2 981 082 A1

[M. Other Embodiments]

In the embodiment of the present invention, by applying threshold values to residual macroblocks obtained by subtracting motion-compensated macroblocks (intra-macroblocks or inter-macroblocks) from original macroblocks, regions to be defined by a remainder and a residual, respectively, are determined. These threshold values and other parameters required for data format conversion may be optimized dynamically or statically using a speed optimization loop.

In the embodiment of the present invention, a modulo operation is performed in order to calculate a remainder. Factor D used as a denominator (modulus) in this modulo operation is determined based on a gradient image of a motion-compensated macroblock (or motion-compensated frame) identical to a target macroblock. This gradient image (gradient(-like) macroblock or gradient(-like) frame) is generated from an intra-macroblock (or intra-frame) or an inter-macroblock (or inter-frame). At this time, the gradient may be calculated among macroblocks of a plurality of frames. That is, a gradient image may be calculated throughout the time domain and/or the spatial domain. Factor D for use in a modulo operation is determined in accordance with the gradient image thus calculated.

In the embodiment of the present invention, factor D for use in a modulo operation may be set equal to a threshold value applied to a gradient(-like) macroblock (or gradient frame) for determining by which of a remainder and a residual each region should be defined.

Although the above-described embodiment describes, as a data format for a macroblock or a frame, (1) the data format in which each region is defined only by a remainder, and (2) the data format in which each region is defined by the combination of a remainder and a residual, another data format can also be employed. Therefore, a macroblock or a frame may include various components, such as all zero, a combination of residuals and zero, all residuals, a combination of remainders and zero, all remainders, a combination of remainders and residuals, and a combination of remainders, residuals and zero.

The above-described embodiment shows a configuration example suited to MPEG-4 AVC, one of the video compression standards. In this configuration example, the processing of data compression after data format conversion is executed by the procedure pursuant to the standard. On the other hand, the processing of data format conversion is optimized in accordance with parameters related to data compression. In the final stage of encoding, any data compression tool may also be applied to still pictures/moving pictures/multi-view images.

Also in decoding processing (i.e., data inverting processing), a decoder in accordance with the data format according to the embodiment of the present invention is used. For example, information on the data format type ("type") is transmitted from the encoder to the decoder. By adding such information, compatibility with conventional apparatuses and the existing standards can be ensured. When data of the data format in which remainders and residuals are combined is transmitted, the bit stream includes parameters related to coding and parameters related to the data format, in addition to parameters required by the standard.

When encoding is carried out in conformance with the MPEG-4 AVC standard, motion data (typically, moving vector) at each position is required for decoding macroblocks/frames encoded in time domain and spatial domain. In the encoded macroblocks/frames, parameters related to data format conversion are used in order to distinguish between a region defined by a remainder and a region defined by a residual (or as zero).

In decoding, a gradient image is also generated from intra-macroblocks (or intra-frame) or inter-macroblocks (or inter-frame). Based on this gradient image, the factor (denominator) for use in an inverse modulo operation for inversing a region defined by a remainder is determined.

In decoding, a region defined by a residual may further be compensated based on a motion-compensated macroblock/frame or a synthesized macroblock/frame.

A corresponding value of a motion-compensated macroblock/frame may be assigned to a region set at zero. A region defined by a remainder is inverted by an inverse modulo operation as described above.

The above-described embodiment shows the application example to the encoding/decoding system for lossy compression, but is also applicable to an encoding/decoding system for lossless compression. In this case, orthogonal transformation-quantization unit 1208 and inverse orthogonal transformation-scaling unit 1212 shown in Fig. 4, inverse orthogonal transformation-scaling unit 2112 shown in Fig. 10, and the like will be unnecessary. That is, processing which causes data loss, such as orthogonal transformation or quantization, will not be executed in encoding.

According to the embodiment of the present invention, a method for converting the data format of images for use in image data compression is provided. This method includes the step of performing data compression on multi-view images captured with a plurality of cameras, multi-view depth maps captured with a plurality of Depth cameras, a series of still pictures or a still picture, or image data of any form, by means of a coding tool obtained by improving the existing standards (an improved data compression tool for still pictures/moving pictures/multi-view images). Here, data format conversion is executed per block (macroblock) composed of a plurality of pixels. Processing of data format conversion includes the steps of:

(a) converting each pixel of a block data format into any of a remainder, a residual and zero in accordance with predetermined parameters based on an inter-macroblock (macroblock encoded using any of forward prediction, backward prediction and bi-directional prediction) or intra-macroblock;

(b) generating a difference block, namely, a residual macroblock based on an inter-macroblock or intra-macroblock and an original macroblock;

(c) enabling a flag for a pixel whose value has been determined that it should be converted into a remainder, based on predetermined parameters and a residual macroblock;

(d) converting pixels whose values have been determined that it should be set at zero among pixels constituting a residual macroblock into zero, based on predetermined parameters (these pixels are treated as pixels in which residuals are zero).

(e) generating a gradient-like image based on an inter-macroblock or intra-macroblock;

(f) setting parameters for determining a remainder by a modulo operation, based on the gradient-like image;

(g) converting, into a remainder, a pixel whose value has been determined that it should be converted into a remainder, based on an original macro and a parameter set having been set for a modulo operation;

(h) subjecting a new macroblock after data format conversion to processing for data compression similar to that of the existing standards for data compression on still pictures/moving pictures/multi-view images;

(i) adding parameters for data format conversion to the optimization processing in conformance with the standard, and executing data compression with the parameters;

(j) executing optimization processing on data compression parameters in conformance with the standard of the new data format and the parameters for data format conversion using existing optimization processing, thereby increasing compression efficiency and compression quality thereof;

(k) providing a data inversion tool with a bit stream of image data compressed using an improved data compression tool for still pictures/moving pictures/multi-view images, information on each compressed macroblock, and corresponding parameters for data format reconversion;

(l) inverting an original pixel value from a residual for an image for which a flag has not been enabled, based on an inter-macroblock or intra-macroblock as well as the residual and zero pixels; and

(m) executing an inverse modulo operation based on an inter-macroblock or intra-macroblock and pixels of a remainder indicated by a flag (in execution of the inverse modulo operation, corresponding parameters for a modulo operation extracted from a received bit stream are used).

Although the above description shows the case where data format conversion and data format reconversion are executed on a macroblock basis, it is needless to say that it is applicable to the entire image. Specifically, residual images for the entire original image may be generated first, and the generated residual images may be subjected to the above-described processing on an image basis.

[N. Advantage]

The embodiment of the present invention provides the configuration in which both of data format conversion and data compression are incorporated in a single system. By adopting such a configuration, complicatedness of the system can be avoided. Furthermore, since compatibility with the existing compression standards can be maintained, incorporation of new data format conversion (encoding) according to the embodiment of the present invention can be facilitated. As described above, in the encoding/decoding system according to the embodiment of the present invention, processing identical to processing with the existing standards can also be achieved if information on remainders is not used. Therefore, compatibility can be maintained.

The encoding/decoding system according to the embodiment of the present invention is applicable to various types of image systems for a distributed source coding, distributed video coding, data compression on still pictures/moving pictures/multi-view images, and the like, for example.

With the encoding/decoding system according to the embodiment of the present invention, data compression efficiency can be improved further by using a new data format within the range of the existing standards related to data compression on still pictures/moving pictures/multi-view images.

In implementation of the encoding/decoding system according to the embodiment of the present invention, only a slight modification is needed to the data compression tool for still pictures/moving pictures/multi-view images in alignment with the existing standards. Moreover, by disabling the processing according to the embodiment of the present invention, the data compression tool for still pictures/moving pictures/multi-view images in which the encoding/decoding system according to the embodiment of the present invention is mounted can still maintain compatibility with the existing standards.

It should be understood that the embodiment disclosed herein is illustrative and non-restrictive in every respect. The scope of the present invention is defined by the claims not by the description above, and is intended to include any modification within the meaning and scope equivalent to the terms of the claims.

REFERENCE SIGNS LIST

1 3D displays reproduction system; 2 object; 10 camera; 100, 200 information processing apparatus; 102, 202 wireless transmission device; 104, 204 processor; 106,206 memory; 108 camera interface; 110 preprocessor; 112,212 communication interface; 114, 214 hard disk; 114a encoding program; 116, 216 input unit; 118, 218 display unit; 120, 820 encoder; 122, 222 bus; 208 projector interface; 210, 910 decoder; 214a decoding program; 214b image data; 220 postprocessor; 300 3D display device; 302 projector array; 310 display screen; 312 diffusion film; 314 condenser lens; 1202, 2102, 8202, 9102 input buffer; 1204, 8204 division unit; 1206 data format conversion unit; 1208, 8208 orthogonal transformation-quantization unit; 1210, 8210 local decoder; 1212, 2112, 8212, 9112 inverse orthogonal transformation-scaling unit; 1214, 2114 data format reconversion unit; 1216, 2116, 8216, 9116 deblock filter; 1218, 2118, 8218, 9118 intra-frame prediction unit; 1220, 2120, 8220, 9120 motion compensation unit; 1222, 1269, 2122, 8222, 9122 switching unit; 1230, 2130, 8230, 9130 control unit; 1240, 8240 motion estimation unit; 1242, 2142, 8242, 9142 output buffer; 1250, 8250 entropy coding unit; 1260, 8206 subtraction unit; 1262 comparison unit; 1264 mask generation unit; 1265 integration unit; 1266, 1290 processing selection unit; 1267 evaluation unit; 1270 gradient image generation unit; 1272 factor selection unit; 1274 Lookup table; 1278 modulo operation unit; 1280, 1294 synthesis unit; 1292, 8214, 9114 addition unit; 1298 inverse modulo operation unit; 2104, 9104 entropy decoding unit.

**Claims**

1. A method for encoding a plurality of input images containing mutually related information, comprising the steps of:

   estimating a motion image indicating a change component from one or more previous input images, contained in a subsequent input image;
   generating a residual image from a difference between the subsequent input image and the estimated motion image;
   specifying a region whose pixel value should be defined by a remainder among pixels constituting the residual image, based on the pixel value of the residual image;
   converting, into a remainder, the pixel value for the specified region which should be defined by a remainder; and
   encoding the residual image after the conversion and additional information specifying the region which should be defined by a remainder.

2. The method according to claim 1, further comprising the step of executing an inverse modulo operation on a pixel defined by the remainder among pixels constituting the residual image after the conversion, thereby decoding the residual image, wherein
   the step of estimating includes a step of estimating the motion image based on the decoded residual image.

3. The method according to claim 1 or 2, wherein
   the step of specifying includes a step of determining the region which should be defined by a remainder on a pixel basis based on a magnitude of the pixel value of each of the pixels constituting the residual image, and
   the additional information contains information for specifying each pixel defined by a remainder among the pixels constituting the residual image.

4. The method according to any one of claims 1 to 3, wherein
   the step of specifying includes a step of, for each of blocks obtained by dividing the residual image into predetermined size, determining the region which should be defined by a remainder on a block basis based on a result of combining evaluations of pixel values of respective pixels constituting the block, and
   the additional information contains information for specifying a block defined by a remainder among the blocks included in the residual image.

5. The method according to any one of claims 1 to 4, wherein
   the step of converting includes steps of

   executing a modulo operation on the pixel value for the region which should be defined by a remainder,
   obtaining gradient information on the motion image, and
   with reference to a predetermined correspondence between a gradient and a value for use as a modulus in the modulo operation, determining the value for use as a modulus in the modulo operation based on the obtained gradient information.

6. A storage medium having a program stored thereon for encoding a plurality of input images containing mutually related information, the program causing a computer to perform the steps of:

estimating a motion image indicating a change component from one or more previous input images, contained in a subsequent input image;
generating a residual image from a difference between the subsequent input image and the estimated motion image;
specifying a region whose pixel value should be defined by a remainder among pixels constituting the residual image, based on the pixel value of the residual image;
converting, into a remainder, the pixel value for the specified region which should be defined by a remainder; and
encoding the residual image after the conversion and additional information specifying the region which should be defined by a remainder.

7. An apparatus for encoding a plurality of input images containing mutually related information, comprising:

means for estimating a motion image indicating a change component from one or more previous input images, contained in a subsequent input image;
means for generating a residual image from a difference between the subsequent input image and the estimated motion image;
means for specifying a region whose pixel value should be defined by a remainder among pixels constituting the residual image, based on the pixel value of the residual image;
means for converting, into a remainder, the pixel value for the specified region which should be defined by a remainder; and
means for encoding the residual image after the conversion and additional information specifying the region which should be defined by a remainder.

FIG.1

EP 2 981 082 A1

# FIG.2

# FIG.3

FIG.4

EP 2 981 082 A1

# FIG.5

## (a) FIRST DATA FORMAT

FRAME     MACROBLOCK — PIXEL

| Res | Rem | Rem | Res |
| Res | Rem | Res | Rem |
| Rem | Rem | Res | Rem |
| Res | Rem | Rem | Rem |

↑
THRESHOLD VALUE TH1

## (b) SECOND DATA FORMAT

FRAME     FRAME    MACROBLOCK

⇒

| Rem | Res | Rem | Rem | Res | Res |
| Res | Rem | Res | Rem | Rem | Rem |
| Res | Rem | Rem | Rem | Res | Res |
| Rem | Res | Rem | Res | Res | Rem |
| Res | Rem | Res | Rem | Res | Res |
| Res | Res | Rem | Rem | Rem | Res |

↑
THRESHOLD VALUE TH1
THRESHOLD VALUE TH2

24

## FIG.6

EP 2 981 082 A1

**FIG.7**

1274

| Gradient Range | 0 | 1 | 2–3 | 4–7 | 8–15 | 16–31 | 32–63 | 64–127 | 128–255 |
|---|---|---|---|---|---|---|---|---|---|
| D | 1 | 2 | 4 | 8 | 16 | 32 | 64 | 128 | 256 |

FIG.8

EP 2 981 082 A1

FIG.9

flag1  flag2

INTRA/
INTER

1214

Converted
MB

PROCESSING
SELECTION
UNIT

1290

Residual

1292

+
+

Remainder

$q' \times D + $ Remainder

GRADIENT
IMAGE
GENERATION
UNIT

1270

FACTOR
SELECTION
UNIT

1272

D

INVERSE
MODULO
OPERATION
UNIT

1298

SYNTHESIS
UNIT

1294

Original
MB

LOOKUP
TABLE

1274

EP 2 981 082 A1

28

# FIG.10

FIG.11

EP 2 981 082 A1

EP 2 981 082 A1

FIG.12

200

- PROCESSOR 204
- MEMORY 206
- INPUT UNIT 216
- DISPLAY UNIT 218
- 222
- IMAGE DATA 214b
- DECODING PROGRAM 214a
- 214
- PROJECTOR INTERFACE 208
- COMMUNICATION INTERFACE 212
- 202
- MULTI-VIEW IMAGES
- 3D DISPLAY DEVICE 300

<div style="text-align:center">**INTERNATIONAL SEARCH REPORT**</div>

| International application No. |
| --- |
| PCT/JP2014/056483 |

A. CLASSIFICATION OF SUBJECT MATTER
*H04N19/102*(2014.01)i

According to International Patent Classification (IPC) or to both national classification and IPC

B. FIELDS SEARCHED

Minimum documentation searched (classification system followed by classification symbols)
H04N19/00-19/98

Documentation searched other than minimum documentation to the extent that such documents are included in the fields searched

| Jitsuyo Shinan Koho | 1922-1996 | Jitsuyo Shinan Toroku Koho | 1996-2014 |
| Kokai Jitsuyo Shinan Koho | 1971-2014 | Toroku Jitsuyo Shinan Koho | 1994-2014 |

Electronic data base consulted during the international search (name of data base and, where practicable, search terms used)
IEEE Xplore, CiNii

C. DOCUMENTS CONSIDERED TO BE RELEVANT

| Category* | Citation of document, with indication, where appropriate, of the relevant passages | Relevant to claim No. |
| --- | --- | --- |
| A | Mehrdad Panahpour Tehrani, Akio Ishikawa, Masahiro Kawakita, Naomi Inoue, Toshiaki Fujii, A hybrid representation for multi-view images, 3DTV-Conference: The True Vision - Capture, Transmission and Display of 3D Video (3DTV-CON), 2012.10.15, pp.1-4 | 1-7 |
| A | Mehrdad Panahpour Tehrani, Toshiaki Fujii, Masayuki Tanimoto, The Adaptive Distributed Source Coding of Multi-View Images in Camera Sensor Networks, IEICE transactions on fundamentals of electronics, communications and computer sciences, 2005.10.01, vol.E88-A, no.10, pp.2835-2843 | 1-7 |

[X] Further documents are listed in the continuation of Box C.   [ ] See patent family annex.

| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| 23 April, 2014 (23.04.14) | 13 May, 2014 (13.05.14) |

| Name and mailing address of the ISA/ | Authorized officer |
| --- | --- |
| Japanese Patent Office | |
| Facsimile No. | Telephone No. |

Form PCT/ISA/210 (second sheet) (July 2009)

## INTERNATIONAL SEARCH REPORT

| International application No. |
| --- |
| PCT/JP2014/056483 |

C (Continuation). DOCUMENTS CONSIDERED TO BE RELEVANT

| Category* | Citation of document, with indication, where appropriate, of the relevant passages | Relevant to claim No. |
| --- | --- | --- |
| A | Mehrdad Panahpour Tehrani, Akio Ishikawa, Masashiro kawakita, Naomi Inoue, Toshiaki Fujii, A New Data Format for Multiview Video, IPSJ SIG Technical Report, 2013.02.22, vol.2013-AVM-80, no.6, pp.1-5 | 1-7 |
| A | JP 4-343576 A (Matsushita Electric Industrial Co., Ltd.), 30 November 1992 (30.11.1992), entire text; all drawings & US 5392037 A | 1-7 |
| A | JP 2011-514024 A (Telefonaktiebolaget LM Ericsson (publ)), 28 April 2011 (28.04.2011), paragraph [0070] & US 2010/0296745 A1 & EP 2081155 A1 & WO 2009/092455 A2 & CN 101919250 A & AT 524927 T & TW 200935359 A | 1-7 |

Form PCT/ISA/210 (continuation of second sheet) (July 2009)

## REFERENCES CITED IN THE DESCRIPTION

**Non-patent literature cited in the description**

- **THOMAS WIEGAND ; GARY J. SULLIVAN ; GISLE BJONTEGAARD ; AJAY LUTHRA.** Overview of the H.264/AVC Video Coding Standard. *IEEE Transactions on Circuits and Systems for Video Technology,* July 2003, vol. 13 (7), 560-576

- **P. MERKLE ; K. MULLER ; A. SMOLIC ; T. WIEGAND.** Efficient Compression of Multi-view Video Exploiting inter-view dependencies based on H.264/MPEG4-AVC. *Proc. ICME,* 2006, 1717-1720